# FASCICULE DE BREVET EUROPEEN

(11) **EP 0 779 691 B1**
(45) Date de publication et mention de la délivrance du brevet: **06.02.2002**
(21) Numéro de dépôt: 96402525.8
(22) Date de dépôt: 22.11.1996
(51) Int. Cl.: H02B 1/26

(54) **Système d'accouplement de sécurité pour un ensemble d'appareils électriques modulaires**
Sicherheitskupplungsanordnung für eine Mehrheit von elektrischen, modularen Geräten
Safety-connecting system for an assembly of electrical, modular apparatuses

(30) Priorité: 14.12.1995 FR 9514867
(43) Date de publication de la demande: 18.06.1997
(73) Titulaire: HAGER ELECTRO S.A., F-67210 Obernai (FR)
(72) Inventeur: Dietrich, Christian, 67140 Gertwiller (FR); Roiatti, Jean-Marie, 67210 Obernai (FR); Deckert, Francis, 67190 Mutzig (FR)
(74) Mandataire: Moncheny, Michel

(56) Documents cités:
- EP-A- 0 340 700
- EP-A- 0 505 796
- EP-A- 0 626 711
- DE-A- 4 403 585
- DE-U- 9 114 742
- FR-A- 2 588 438
- GB-A- 2 009 832
- GB-A- 2 016 632

## Description

La présente invention concerne un système d'accouplement de sécurité pour un ensemble d'appareils électriques modulaires, les éléments de l'ensemble formant des paires de sous-ensembles et seulement deux éléments de deux sous-ensembles correspondants étant destinés à être fixés ensemble, ceci d'une façon prédéfinie au moyen d'au moins une fixation comprenant une pièce de liaison coopérant avec un moyen de réception.

De nos jours, les appareils d'installation électrique sont, dans la plupart des cas, de type modulaire afin de faciliter l'assemblage de tels appareils sur un support commun, par exemple un tableau électrique d'abonné ou une armoire d'installation électrique.

Plus particulièrement, l'accouplement entre deux appareils modulaires, par exemple un disjoncteur divisionnaire multipolaire et un bloc différentiel correspondant, est rendu plus simple par ce concept de modules. En outre, une modification ultérieure d'une installation électrique, par exemple pour l'adapter à de nouveaux besoins de sensibilité, s'effectue sans difficulté. Mais ces facilités de fixation et d'accouplement ont aussi un revers. La ressemblance entre les différents modules augmente les risques de mauvais usage ou d'une fausse manipulation ayant des conséquences graves, par exemple une électrisation ou un incendie.

L'évolution des normes d'installation électrique oblige les constructeurs à prévoir des dispositifs de détrompage et de sécurité pour garantir la conformité des installations électriques et empêcher une mauvaise manipulation, notamment un accouplement non autorisé entre les appareils électriques modulaires par l'installateur électricien.

On connaît, par ailleurs, différents dispositifs de détrompage, par exemple des fiches agencées à une face latérale d'un premier appareil électrique modulaire, coopérant avec des logements complémentaires se trouvant dans un deuxième appareil. Grâce à différentes dispositions de fiches et de trous, on veut exclure des accouplements interdits entre deux appareils. Mais un tel dispositif de détrompage connu n'empêche pas l'accouplement et le désaccouplement des appareils même par des personnes non habilitées et, dans certains cas, le dispositif de détrompage peut être contourné par une simple manipulation, dans le cas susmentionné par exemple en cassant les fiches.

Dans ces conditions, le constructeur des appareils est exposé à des problèmes de garantie puisque l'on peut, après incident, modifier l'appariement erroné des appareils. Des systèmes présentant de tels inconvenients sont décrits par exemple dans les documents EP-A-0 340 700 et EP-A-0 505 796.

La présente invention vise à pallier ces inconvénients en proposant un système d'accouplement de sécurité qui garantit un accouplement conforme aux règles de l'art entre deux appareils modulaires destinés à être fixés ensemble et qui permet de constater un désaccouplement ultérieur.

A cet effet, l'invention a pour objet un système d'accouplement de sécurité pour un ensemble d'appareils électriques modulaires, les éléments de l'ensemble formant des paires de sous-ensembles et seulement deux éléments de deux sous-ensembles correspondants étant destinés à être fixés ensemble, ceci d'une façon prédéfinie au moyen d'au moins une fixation comprenant une pièce de liaison coopérant avec un moyen de réception, caractérisé en ce que l'élément d'un sous-ensemble comporte la pièce de liaison, et que l'élément du sous-ensemble correspondant comporte le moyen de réception et que seulement la pièce de liaison et un moyen de réception d'une paire de sous-ensembles correspondants coopèrent ensemble, ceci de manière à fixer les deux éléments l'un contre l'autre de la façon prédéfinie, et en ce qu'il est prévu des moyens laissant au moins une trace observable après un désaccouplement ultérieur de deux éléments accouplés.

Le système d'accouplement peut présenter, en outre, les caractéristiques avantageuses suivantes :
- la pièce de liaison est indispensable à l'accouplement de deux appareils électriques modulaires,
- la pièce de liaison comporte au moins une vis et un dispositif d'entraînement de vis solidaires d'un premier élément d'une paire d'appareils électriques modulaires et en ce que la tige de la vis coopère avec un trou adéquat se trouvant dans le deuxième élément correspondant de la paire de manière à fixer le premier élément au deuxième élément de la façon prédéfinie, et en ce que le dispositif d'entraînement de la vis monté du côté entraîné de la tête de vis entraîne la vis seulement dans le sens prédéfini de rotation, permettant l'accouplement des deux appareils, un entraînement de la vis dans le sens inverse du sens prédéfini de rotation laissant une trace observable,
- la vis et le dispositif d'entraînement peuvent être logés dans un logement longitudinal dans le premier élément d'une paire de dispositifs modulaires et la vis et le dispositif d'entraînement de la vis sont déplaçables dans une certaine mesure sur l'axe de pénétration de la vis et mobiles autour de l'axe de pénétration,
- la longueur des vis et la profondeur des trous adéquats de deux paires différentes de dispositifs modulaires peuvent être différentes,
- la vis peut être une vis auto-taraudeuse et le trou peut être un perçage dans un rivet d'assemblage,
- les vis et les trous adéquats de deux paires différentes de dispositifs modulaires peuvent avoir des diamètres différents,
- le dispositif d'entraînement de la vis peut comporter au moins deux organes cylindriques à section transversale circulaire d'entraînement proprement dit dont l'extrémité du premier organe côté vis est formé de façon à pouvoir entraîner la vis par un mouvement rotatif et son extrémité opposée comprend au moins une rampe délimitant une butée, la rampe étant inclinée dans le sens prédéfini de rotation, les deux extrémités des deux organes en regard l'une de l'autre, présentent une forme complémentaire, et l'autre extrémité du deuxième organe étant formée de façon à pouvoir être entraînée dans un mouvement de rotation par un outil de commande, en variante l'un des organes cylindriques peut être formé par la tête de la vis elle même,
- le premier organe peut présenter à l'intérieur un évidement profilé d'une manière qu'un outil de commande peut l'entraîner dans un mouvement de rotation dans un des deux sens de rotation possibles et en ce qu'au moins un organe comporte au moins une membrane susceptible d'être percée par un outil de commande et que la membrane est placée avant l'évidement profilé du premier organe dans la direction de pénétration de la vis,
- le premier élément d'une paire d'appareils modulaires électriques peut être un bloc différentiel et le deuxième élément de la paire de dispositifs modulaires électriques est un disjoncteur ou multipolaire,

D'autres caractéristiques et avantages de l'invention ressortiront de la description suivante, donnée à titre d'exemple et sans caractère limitatif, en regard des dessins annexés sur lesquels:
- la figure 1 est une vue en perspective d'un disjoncteur bipolaire et d'un bloc de protection différentielle correspondant destinés à être accouplés et équipés d'un système d'accouplement de sécurité selon l'invention ;
- la figure 2 représente une vue en coupe d'un détail du système d'accouplement de sécurité suivant l'invention pour deux paires différentes d'appareils électriques modulaires ;
- la figure 3 est une vue en perspective de différentes composantes d'une pièce de liaison selon l'invention ; et
- la figure 4 est une vue en coupe partielle selon la ligne IV - IV de la figure 1.

Les exemples qui seront décrits par la suite montrent des modes de réalisation selon l'invention appliqués à des disjoncteurs/blocs de protection différentielle. Ils s'appliquent d'une manière correspondante à tous les appareils électriques modulaires devant être accouplés l'un contre l'autre.

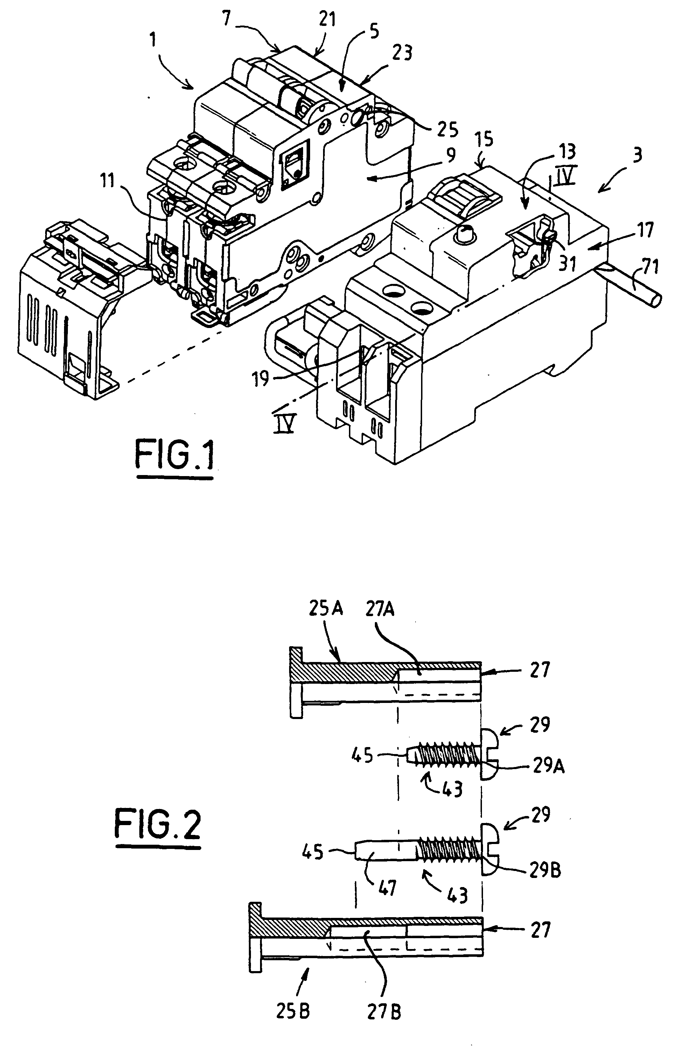

Sur la figure 1, on distingue de façon générale deux appareils électriques modulaires 1 et 3 devant être accouplés, plus particulièrement, un disjoncteur bipolaire 1 et un bloc de protection différentielle 3 correspondant.

Le disjoncteur 1 et le bloc de protection différentielle 3 font partie d'un ensemble non représenté d'appareils électriques modulaires constitué par des disjoncteurs bi-, tri- et tétrapolaires ainsi que des blocs de protection différentielle bi-, tri- et tétrapolaires. Les disjoncteurs et les blocs de protection différentielle constituent des paires d'appareils électriques modulaires devant être accouplés de façon à exclure tout accouplement d'un bloc de protection différentielle avec un disjoncteur ayant moins de pôles de connexion que ce premier. Dans un tel cas de mauvais accouplement, une borne de connexion du bloc de protection différentielle ne serait pas connectée et le bon fonctionnement dudit bloc plus assuré.

Le disjoncteur 1 présente une face avant 5, une face verticale gauche 7 (non réellement visible sur la figure 1), une face verticale droite 9 et une face horizontale inférieure 11. De même, le bloc de protection différentielle 3 présente une face avant 13, une face verticale gauche 15 (non réellement visible sur la figure 1), une face verticale droite 17 et une face horizontale inférieure 19.

Suivant l'exemple représenté sur la figure 1, le bloc de protection différentielle 3 est destiné à être fixé par sa face verticale gauche 15 à la face verticale droite 9 du disjoncteur bipolaire 1.

Le disjoncteur bipolaire 1 est constitué par deux disjoncteurs unipolaires 21 et 23 disposés côte à côte. Comme il est connu de l'art, chaque disjoncteur unipolaire présente un trou le traversant entièrement dans le sens de sa largeur et les disjoncteurs 21 et 23 sont assemblés à travers dudit trou au moyen d'un rivet d'assemblage 25 de façon que cet ensemble constitue un seul disjoncteur différentiel bipolaire 1.

Du côté de la face verticale droite 9, le rivet d'assemblage 25 de chaque disjoncteur multipolaire de l'ensemble est pourvu d'un perçage 27. On voit sur la figure 2 le rivet d'assemblage 25A d'un disjoncteur bipolaire pourvu d'un perçage 27A ainsi que le rivet d'assemblage 25B d'un disjoncteur tripolaire pourvu d'un perçage 27B. Le perçage 27B est plus profond que le perçage 27A. Le perçage non représenté dans le rivet d'assemblage d'un disjoncteur tétrapolaire est encore plus profond que celle du disjoncteur tripolaire. La profondeur des perçages dans les rivets d'assemblage est donc une fonction du nombre de pôle du disjoncteur.

Le diamètre de perçage 27 est inférieur au diamètre des rivets et adapté pour recevoir des vis auto-taraudeuses 29A, 29B qui sont également représentées sur la figure 2.

Le disjoncteur 1 et le bloc de protection différentiel 3 sont accouplés au moyen d'une pièce de liaison 31 se trouvant dans un logement 33 ménagé dans la partie supérieure vers l'avant du bloc de protection différentiel 3 de façon que la pièce de liaison 31 coopère avec le perçage 27 adéquat dans le rivet d'assemblage 25 lors de l'accouplement des deux appareils.

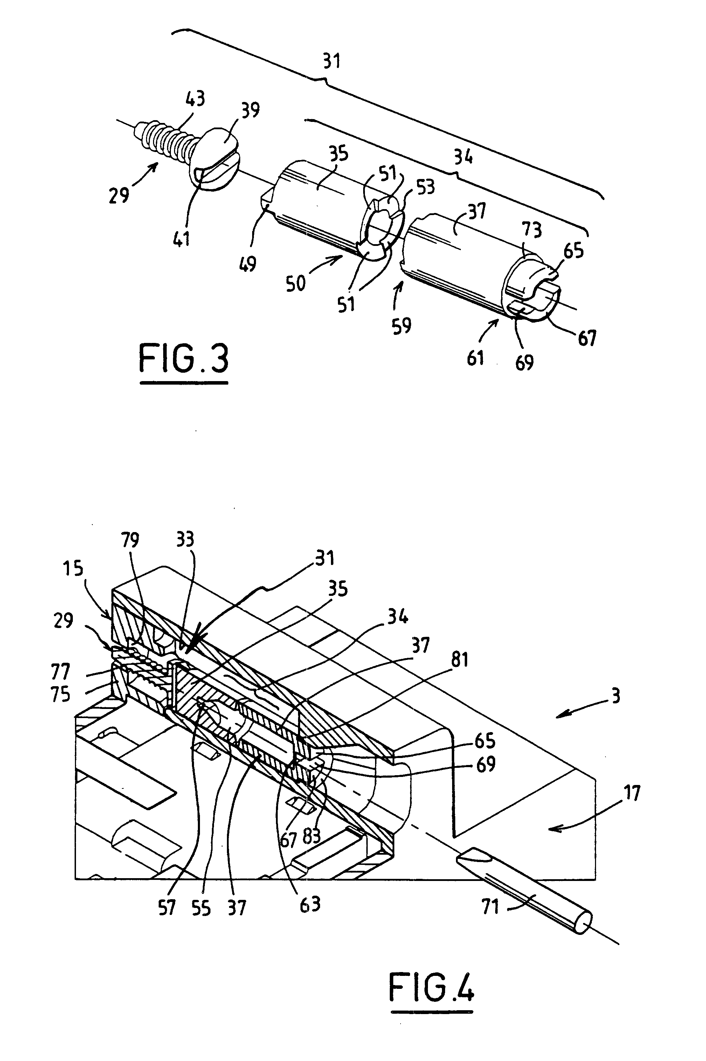

Comme on le voit sur la figure 3, la pièce de liaison 31 comprend une vis auto-taraudeuse 29 et un dispositif 34 d'entraînement de la vis. Le dispositif 34 d'entraînement est composé de deux organes 35 et 37 de forme cylindrique avec une section transversale circulaire.

La figure 4 montre en vue de coupe suivant la ligne IV-IV le bloc de protection différentielle 3. En partant de la gauche, c'est-à-dire de la face verticale gauche 15 du bloc 3, la vis 29 est montée devant le premier organe 35 et celui-ci devant le deuxième organe 37 dans le logement 33. Le premier organe 35 se trouve donc coincé entre la vis 29 et le deuxième organe 37. Le diamètre de la tête de vis 39 et les deux organes 35 et 37 sont sensiblement identiques.

Les vis auto-taraudeuses 29 comprennent une tête de vis 39 munie d'une fente 41 et une tige 43, et l'embout 45 de la vis auto-taraudeuse est plan afin que la vis ne puisse s'engager que dans un trou prépercé.

La figure 2 montre une vis auto-taraudeuse 29A d'un bloc de protection différentielle bipolaire ainsi qu'une vis auto-taraudeuse 29B d'un bloc de protection différentielle tripolaire. La tige 43 de la vis auto-taraudeuse 29A est entièrement filetée tandis que la vis 29B, présentant un filetage du côté de la tête de vis 39 sur la même longueur de la tige que la vis 29A, est munie en plus d'un prolongement cylindrique 47 lisse. La vis auto-taraudeuse non représentée du bloc de protection différentiel tétrapolaire présente un filetage du côté de la tête de vis 39 sur la même longueur de la tige que la vis 29A et est munie d'un prolongement cylindrique lisse de deux fois la longueur de celui de la vis 29B.

Les vis auto-taraudeuses des différents blocs de protection différentielle présentent donc toutes une partie filetée du côté de la tête de vis de la même longueur, la tige de la vis présentant un prolongement cylindrique dont la longueur dépend du nombre de pôles de la façon décrite ci-dessus.

Le premier organe 35 du dispositif d'entraînement 34 présente à l'extrémité du côté de la vis auto-taraudeuse 29 une languette 49 qui s'engage (voir figure 4) dans la fente 41 de la tête de vis 39 afin de pouvoir l'entraîner lors de l'accouplement du bloc de protection différentiel et du disjoncteur. L'autre extrémité 50 de l'organe 35 présente quatre rampes 51 délimitant quatre butées 53, les rampes 51 étant inclinées dans le sens de rotation suivant lequel la vis 29 taraude et s'engage dans le perçage 27 lors du vissage.

Sur la figure 4 on voit que l'espace intérieur 55 du premier organe 35 délimite un évidement 57 profilé sensiblement en V de manière à ce qu'un outil de commande, par exemple un tournevis pour vis à tête fendue, puisse l'engager dans un mouvement de rotation.

L'extrémité 59 du deuxième organe qui est en regard du premier organe 35 présente une forme complémentaire à celle de l'extrémité du premier organe 35 pour que l'organe 37 puisse engager l'organe 35 dans un mouvement de rotation dans le sens de pénétration de la vis.

L'autre extrémité 61 du deuxième organe 37 est fermée par une fine membrane 63 (voir figure 4), par exemple en matière plastique. Cette extrémité 61 présente en plus deux parties semi-cylindriques 65 et 67 complémentaires en saillie délimitant une encoche 69 permettant l'entraînement rotatif de l'organe 37 par un outil de commande, par exemple un tournevis 71. Les deux parties semi-cylindriques 65 et 67 sont disposées sur l'extrémité 61 de façon à former un épaulement 73 sur la zone périphérique de cette dernière.

La forme générale du logement 33 ménagé dans le bloc de protection différentiel 3 et recevant la pièce de liaison 31 est celle d'un cylindre à section transversale circulaire de manière que la pièce de liaison 31 puisse être animée dans un mouvement de rotation sans difficulté et puisse se déplacer le long de l'axe de pénétration de la vis. L'extrémité 75 du logement 33, côté face verticale gauche 15 du bloc 3, est partiellement fermée, un passage circulaire 77 se trouve au centre de la section d'extrémité 75 de façon que la tige 43 de la vis auto-taraudeuse 29 puisse passer à travers celui-ci mais que la tête de vis 39 est bloquée par une butée 79 formée par la partie fermée de cette tranche d'extrémité. L'autre tranche d'extrémité 81 du logement 33 est aussi partiellement fermée, et un passage circulaire 83 se trouve au centre de cette extrémité de façon que les parties semi-cylindriques 65 et 67 peuvent glisser dans ce passage mais que le deuxième organe 37 est bloqué dans le logement par l'épaulement 73. Ainsi, la pièce de liaison est enfermée d'une manière imperdable dans le logement 33, le deuxième organe 37 du dispositif d'entraînement de la vis 33 étant accessible pour un tournevis à travers le passage 83.

L'accouplement d'un disjoncteur bipolaire 1 et d'un bloc de protection différentiel correspondant s'effectue de la manière suivante.

On place le disjoncteur 1 et le bloc de protection différentiel 3 côte à côte, la face verticale droite 9 du disjoncteur en regard de la face verticale gauche 15 du bloc de protection différentielle 3, le perçage 27 dans le rivet d'assemblage 25 en face de la vis auto-taraudeuse 29. Un tournevis 71 de taille adaptée s'engage dans l'encoche 69. En appuyant le tournevis 71 en direction de la vis et en entraînant simultanément l'organe 37 dans un mouvement de rotation suivant lequel la vis 29 taraude et s'engage dans le perçage, l'extrémité 59 de l'organe 37 en prise avec les butées 53, entraîne ainsi l'organe 35, celui-ci entraînant la vis auto-taraudeuse 29 par la languette 49 en prise avec la fente 41 de la tête 39 de vis. Par conséquent, la vis auto-taraudeuse 29 taraude et s'engage dans le perçage 27. On visse alors jusqu'au moment où la tête de vis 39 s'appuie contre la tranche d'extrémité 75 du logement 33, les deux appareils étant ainsi correctement accouplés.

Un désaccouplement en entraînant l'organe 37 par le tournevis 71 dans le sens de rotation inverse est impossible, car dans ce cas, les rampes de l'extrémité 59 et les rampes 51 glissent sans prise les unes sur les autres. L'organe 35 ne peut donc être entraîné par l'outil de commande 71 que dans un sens de rotation prédéfinie permettant le vissage de la vis 29 et ainsi l'accouplement des deux appareils électriques.

Dans le cas où on doit quand même désaccoupler les deux appareils, on perce avec un autre tournevis non représenté de taille adaptée pour l'évidement 57 la membrane 63 et on avance le tournevis jusqu'à ce que celui-ci est en prise avec l'évidement 57. La vis auto-taraudeuse 29 est ensuite entraînée dans le sens de dévissage à travers l'organe 35 par ce tournevis. Le perçage de la membrane 63 laisse une trace observable témoignant du désaccouplement des deux appareils.

La longueur différente des tiges 43 de vis et la profondeur différente des perçages 27, toutes les deux dépendantes du nombre de pôles de l'appareil, rend impossible un mauvais accouplage de deux appareils électriques modulaires. Si on voulait, par exemple, accoupler un disjoncteur bipolaire 1 à un bloc de protection différentielle tripolaire non représenté muni d'une pièce de liaison qui comprend une vis auto-taraudeuse 29B munie d'un prolongement cylindrique 47, celle-ci prend appui au fond du perçage 27B du disjoncteur bipolaire, lors des mouvements d'accouplements décrits ci-dessus, avant la prise du filetage de la vis 29B. Une fixation de la vis 29B et ainsi l'accouplement des deux appareils électriques sus-mentionnés est rendu impossible car le vissage de la vis 29 est indispensable pour un accouplement correct entre deux appareils électriques modulaires.

L'accouplement d'un bloc de protection différentielle avec tout disjoncteur possédant moins de pôles que ce premier est rendu impossible de la même manière. Puisqu'un disjoncteur monopolaire ne dispose pas de rivets d'assemblage et que le trou le traversant entièrement dans le sens de sa largeur, a un diamètre plus grand que le diamètre de la tige 43 de vis 29, la vis auto-taraudeuse ne peut pas se tarauder dans ce trou, et un accouplement entre un disjoncteur monopolaire et tout bloc de protection différentiel est rendu impossible.

Bien entendu, un système équivalent de détrompage constitué dans la description ci-dessus par des vis de longueurs différentes et des perçages correspondants peut aussi être constitué par des vis et des trous de diamètres différents. L'utilisation d'une vis auto-taraudeuse n'est pas non plus indispensable, une vis et une douille de vis adaptée pouvant avoir la même fonction.

## Revendications

1. Système d'accouplement de sécurité pour un ensemble d'appareils électriques modulaires, l'ensemble d'appareils comprenant des sous-ensembles d'appareils, les appareils d'un sous-ensemble étant destinés à être fixés à des appareils appartenant à un sous-ensemble correspondant, au moins par une pièce de liaison (31) portée par un appareil (3) d'un sous-ensemble et coopérant avec un moyen de réception (27) porté par un appareil (1) du sous-ensemble correspondant, **caractérisé en ce que** les pièces de liaison (31) et les moyens de réception (27) des appareils appartenant respectivement à deux sous-ensembles correspondants présentent des propriétés mécaniques complémentaires excluant la fixation d'un appareil appartenant à l'un des deux sous-ensembles correspondants à un appareil appartenant à un sous-ensemble différent desdits sous-ensembles correspondants.

2. Système d'accouplement de sécurité selon la revendication 1, **caractérisé en ce qu'**il est prévu des moyens (63) laissant au moins une trace observable après un désaccouplement de deux appareils accouplés.

3. Système d'accouplement de sécurité selon la revendication 1 ou 2, **caractérisé en ce que** les pièces de liaison (31) sont indispensables à l'accouplement des appareils électriques modulaires.

4. Système d'accouplement de sécurité selon l'une quelconque des revendications 1 à 3, **caractérisé en ce que** la pièce de liaison (31) d'un appareil (3) appartenant à un des deux sous-ensembles correspondants comporte au moins une vis (29) et un dispositif d'entraînement (34) de vis (29) et **en ce que** le moyen de réception d'un appareil (1) appartenant à l'autre sous-ensemble des sous-ensembles correspondants comprend un trou (27) adéquat destiné à coopérer avec la vis (29) de manière à fixer les appareils l'un à l'autre d'une façon prédéfinie.

5. Système d'accouplement de sécurité selon la revendication 4, **caractérisé en ce que** le dispositif d'entraînement (34) de la vis (29) monté du côté entraîné de la tête (39) de vis entraîne la vis (29) seulement dans un sens prédéfini de rotation, permettant l'accouplement de deux appareils, un entraînement de la vis (29) dans le sens inverse du sens prédéfini de rotation laissant une trace observable.

6. Système d'accouplement de sécurité selon la revendication 4 ou 5, **caractérisé en ce que** la longueur des vis (29, 29A, 29B) et la profondeur des trous (27, 27A, 27B) adéquats d'appareils appartenant à des sous-ensembles correspondants sont différentes de celles des appareils appartenant à un sous-ensemble différent desdits sous-ensembles correspondants.

7. Système d'accouplement de sécurité selon la revendication 6, **caractérisé en ce que** les vis (29, 29A, 29B) comportent une tige (43) présentant un filetage de la même longueur du côté de la tête (39) de vis et munie d'un prolongement (47) cylindrique lisse dont la longueur dépend de l'appartenance à un sous-ensemble d'appareils.

8. Système d'accouplement de sécurité selon l'une quelconques des revendications 4 à 7, **caractérisé en ce que** le dispositif d'entraînement (34) de la vis (29) est associé à une membrane (63) qui doit être perforée par un outil de commande (71) pour pouvoir entraîner la vis dans un mouvement de rotation de sens opposé au sens prédéfini de rotation.

9. Système d'accouplement de sécurité selon l'une quelconque des revendications 4 à 8, **caractérisé en ce que** le dispositif d'entraînement (34) de la vis comporte au moins deux organes d'entraînement proprement dit (35, 37) de forme cylindrique à section transversale circulaire, dont l'extrémité du premier organe (35) côté vis (29) est formée de façon à pouvoir entraîner la vis (29) par un mouvement rotatif et son extrémité opposée comprend au moins une rampe (51) délimitant une butée (53), la rampe (51) étant inclinée dans le sens prédéfini de rotation, les deux extrémités (50, 59) des deux organes (35, 37) en regard l'une de l'autre, présentent une forme complémentaire, et l'autre extrémité (61) du deuxième organe (37) étant formée de façon à pouvoir être entraînée dans un mouvement de rotation par un outil de commande (71).

10. Système d'accouplement de sécurité selon la revendication 9, **caractérisé en ce que** le premier organe (35) présente à l'intérieur un évidement (57) profilé d'une manière qu'un outil de commande peut l'entraîner dans un mouvement de rotation dans un des deux sens de rotation possibles et **en ce qu'**au moins un organe (35, 37) comporte au moins une membrane (63) susceptible d'être percée par un outil de commande et que la membrane (63) est placée avant l'évidement (57) profilé du premier organe (35) dans la direction de pénétration de la vis.

11. Système d'accouplement de sécurité selon l'une des revendications 4 à 10, **caractérisé en ce que** la vis (29) et le dispositif d'entraînement (34) sont logés dans un logement (33) longitudinal dans un appareil (3) appartenant à un des sous-ensembles correspondants et **en ce que** la vis (29) et le dispositif d'entraînement (34) de la vis (29) sont déplaçables dans une certaine mesure sur l'axe de pénétration de la vis (29) et mobiles autour de l'axe de pénétration.

12. Système d'accouplement de sécurité selon l'une des revendications 4 à 11, **caractérisé en ce que** la vis (29) est une vis auto-taraudeuse.

13. Système d'accouplement de sécurité selon l'une quelconque des revendications 4 à 12, **caractérisé en ce que** le trou (27) est un perçage dans un rivet d'assemblage (25).

14. Système d'accouplement de sécurité selon l'une des revendications 4 à 13, **caractérisé en ce que** les vis (29, 29A, 29B) et les trous adéquats (27, 27A, 27B) d'appareils appartenant à des sous-ensembles correspondants ont des diamètres différents de ceux des appareils appartenant à un sous-ensemble différent desdits sous-ensembles correspondants.

15. Système d'accouplement de sécurité selon l'une quelconque des revendications précédentes, **caractérisé en ce que** l'appareil appartenant à un des sous-ensembles correspondants est un bloc différentiel (3) et que l'appareil appartenant à l'autre sous-ensemble des sous-ensembles correspondants est un disjoncteur (1) uni- ou multipolaire.

## Patentansprüche

1. Sicherheitskupplungssystem für eine Einheit von modularen elektrischen Geräten, wobei die Einheit von Geräten Untereinheiten von Geräten umfasst, wobei die Geräte einer Untereinheiten dazu bestimmt sind, an Geräten, die einer entsprechenden Untereinheit angehören, befestigt zu werden, mit Hilfe von mindestens einem Verbindungsstück (31), das von einem Gerät (3) einer Untereinheit getragen wird und mit einem Aufnahmemittel (27) zusammenwirkt, das von einem Gerät (1) einer entsprechenden Untereinheit getragen wird, **dadurch gekennzeichnet, dass** die Verbindungsstücke (31) und die Aufnahmemittel (27) der Geräte, die jeweils zwei entsprechenden Untereinheiten angehören, komplementäre mechanische Eigenschaften aufweisen, die die Befestigung eines Geräts, das einer der beiden entsprechenden Untereinheiten angehört, an einem Gerät, das einer anderen Untereinheit als diesen entsprechenden Untereinheiten angehört, ausschließt.

2. Sicherheitskupplungssystem nach Anspruch 1, **dadurch gekennzeichnet, dass** Mittel (63) vorgesehen sind, die mindestens eine wahrnehmbare Spur nach einer Entkupplung von zwei gekuppelten Geräten hinterlassen.

3. Sicherheitskupplungssystem nach Anspruch 1 oder 2, **dadurch gekennzeichnet, dass** die Verbindungsstücke (31) für die Kupplung der beiden modular aufgebauten elektrischen Geräte unerlässlich sind.

4. Sicherheitskupplungssystem nach einem der Ansprüche 1 bis 3, **dadurch gekennzeichnet, dass** das Verbindungsstück (31) eines Geräts (3), das einer der beiden entsprechenden Untereinheiten angehört, mindestens eine Schraube (29) und eine Antriebsvorrichtung (34) für die Schraube (29) umfasst, und dass das Aufnahmemittel eines Geräts (1), das der anderen Untereinheit der entsprechenden Untereinheiten angehört, ein passendes Loch (27) umfasst, das dazu bestimmt ist, mit der Schraube (29) so zusammenzuwirken, dass die Geräte auf vordefinierte Weise aneinander befestigt werden.

5. Sicherheitskupplungssystem nach Anspruch 4, **dadurch gekennzeichnet, dass** die Antriebsvorrichtung (34) für die Schraube (29), die auf der angetriebenen Seite des Schraubenkopfes (39) montiert ist, die Schraube (29) nur in eine vordefinierte Drehrichtung antreibt, wodurch sie die Kupplung der beiden Geräte ermöglicht, wobei ein Antrieb der Schraube (29) in die zu der vordefinierten Richtung entgegengesetzte Drehrichtung eine wahrnehmbare Spur hinterlässt.

6. Sicherheitskupplungssystem nach Anspruch 4 oder 5, **dadurch gekennzeichnet, dass** die Länge der Schrauben (29, 29A, 29B) und die Tiefe der passenden Löcher (27, 27A, 27B) von Geräten, die entsprechenden Untereinheiten angehören, unterschiedlich sind zu jenen von Geräten, die einer anderen Untereinheit als jenen entsprechenden Untereinheiten angehören.

7. Sicherheitskupplungssystem nach Anspruch 6, **dadurch gekennzeichnet, dass** die Schrauben (29, 29A, 29B) einen Schaft (43) aufweisen, der ein Gewinde derselben Länge auf der Seite des Schraubenkopfes (39) aufweist, und mit einer glatten zylindrischen Verlängerung (47) versehen ist, deren Länge von der Zugehörigkeit zu einer Untereinheit von Geräten abhängt.

8. Sicherheitskupplungssystem nach einem der Ansprüche 4 bis 7, **dadurch gekennzeichnet, dass** die Antriebsvorrichtung (34) für die Schraube (29) mit einer Membran (63) verbunden ist, die von einem Steuermittel (71) durchbrochen werden muss, um die Schraube in einer Drehbewegung entgegen der vordefinierte Drehrichtung anzutreiben.

9. Sicherheitskupplungssystem nach einem der Ansprüche 4 bis 8, **dadurch gekennzeichnet, dass** die Antriebsvorrichtung (34) der Schraube mindestens zwei eigentliche Antriebselemente (35, 37) zylindrischer Form mit kreisförmigem Querschnitt umfasst, wobei das Ende des ersten Elements (35) auf der Schraubenseite (29) derart ausgebildet ist, dass es die Schraube (29) durch eine Drehbewegung antreiben kann, und das gegenüberliegende Ende mindestens eine Rampe (51) umfasst, die einen Anschlag (53) begrenzt, wobei die Rampe (51) in die vordefinierte Drehrichtung geneigt ist, wobei die beiden Enden (50, 59) der beiden Elemente (35, 37), die einander gegenüber liegen, eine komplementäre Form aufweisen, und wobei das zweite Ende (61) des zweiten Elements (37) derart ausgebildet ist, **dass** es durch ein Steuermittel (71) in einer Drehbewegung angetrieben werden kann.

10. Sicherheitskupplungssystem nach Anspruch 9, **dadurch gekennzeichnet, dass** das erste Element (35) im Inneren eine Aussparung (57) aufweist, die derart profiliert ist, dass ein Steuermittel dieses in einer Drehbewegung in eine der beiden möglichen Drehrichtungen antreiben kann, und dass mindestens ein Element (35, 37) mindestens eine Membran (63) umfasst, die von einem Steuermittel durchbrochen werden kann, und dass die Membran (63) vor der profilierten Aussparung (57) des ersten Elements (35) in der Eindringrichtung der Schraube angeordnet ist.

11. Sicherheitskupplungssystem nach einem der Ansprüche 4 bis 10, **dadurch gekennzeichnet, dass** die Schraube (29) und die Antriebsvorrichtung (34) in einer Längslagerung (33) in einem Gerät (3) angeordnet sind, das einer der entsprechenden Untereinheiten angehört, und dass die Schraube (29) und die Antriebsvorrichtung (34) der Schraube (29) in einem gewissen Ausmaß auf der Eindringachse der Schraube (29) verschiebbar und um die Eindringachse beweglich sind.

12. Sicherheitskupplungssystem nach einem der Ansprüche 4 bis 11, **dadurch gekennzeichnet, dass** die Schraube (29) eine Schneidschraube ist.

13. Sicherheitskupplungssystem nach einem der Ansprüche 4 bis 12, **dadurch gekennzeichnet, dass** das Loch (27) eine Bohrung in einem Montageniet (25) ist.

14. Sicherheitskupplungssystem nach einem der Ansprüche 4 bis 13, **dadurch gekennzeichnet, dass** die Schrauben (29, 29A, 29B) und die passenden Löcher (27, 27A, 27B) von Geräten, die entsprechenden Untereinheiten angehören, andere Durchmesser als jene der Geräte, die einer anderen Untereinheit als den entsprechenden Untereinheiten angehören, aufweisen.

15. Sicherheitskupplungssystem nach einem der vorhergehenden Ansprüche, **dadurch gekennzeichnet, dass** das Gerät, das einer der entsprechenden Untereinheiten angehört, ein Differentialblock (3) ist, und dass das Gerät, das der anderen Untereinheit der entsprechenden Untereinheiten angehört, ein uni- oder multipolarer Schalter (1) ist.

## Claims

1. Safety coupling system for an assembly of items of modular electrical equipment, the assembly of items comprising sub-assemblies of items, the items of a sub-assembly being designed to be secured to items belonging to an associated sub-assembly, at least by a connecting piece (31) carried by an item (3) of a sub-assembly and co-operating with receiving means (27) carried by an item (1) of the associated sub- assembly, **characterised in that** the connecting pieces (31) and the receiving means (27) of the items belonging respectively to two associated sub-assemblies have complementary mechanical properties which exclude the attachment of an item belonging to one of the two associated sub-assemblies to an item belonging to a sub-assembly different from the said associated sub-assemblies.

2. Safety coupling system according to Claim 1, **characterised in that** it is provided with means (63) leaving at least one visible trace after uncoupling of the two coupled items.

3. Safety coupling system according to Claim 1 or 2, **characterised in that** the connecting pieces (31) are essential to the coupling of the items of modular electrical equipment.

4. Safety coupling system according to any one of Claims 1 to 3, **characterised in that** the connecting piece (31) of an item (3) belonging to one of the two associated sub-assemblies comprises at least one screw (29) and a driving arrangement (34) for the screw (29) and **in that** the receiving means of an item (1) belonging to the other sub-assembly of the associated sub-assemblies comprises a matching hole (27) designed to cooperate with the screw (29) in a way such as to secure the items to one another in a prearranged manner.

5. Safety coupling system according to Claim 4, **characterised in that** the driving arrangement (34) for the screw (29) mounted at the driven end of the head (39) of the screw drives the screw (29) only in one prearranged direction of rotation, allowing the coupling together of the two items, any driving of the screw (29) in the direction opposite to the prearranged direction of rotation leaving a visible trace.

6. Safety coupling system according to Claim 4 or 5, **characterised in that** the length of the screws (29, 29A, 29B) and the depth of the matching holes (27, 27A, 27B) of the items belonging to associated sub-assemblies are different from those of the items belonging to a different sub-assembly of the said associated sub-assemblies.

7. Safety coupling system according to Claim 6, **characterised in that** the screw (29, 29A, 29B) has a shank (43) which has a screw thread of the same length adjacent to the head (39) of the screw and provided with a smooth cylindrical extension (47) of which the length depends on the group-association of a sub-assembly item.

8. Safety coupling system according to any one of Claims 4 to 7, **characterised in that** the driving arrangement (34) for the screw (29) is associated with a diaphragm (63) which has to be perforated by an operating tool (71) to be able to drive the screw in a rotational movement in a direction opposite to the prearranged direction of rotation.

9. Safety coupling system according to any one of Claims 4 to 8, **characterised in that** the driving arrangement (34) for the screw comprises at least two separate driving members (35, 37) of cylindrical shape and round cross-section, of which the end of the first member (35) nearer the screw (29) is shaped in a way to be able to drive the screw (29) in a rotary movement and its opposite end has at least one ramp (51) defining an abutment (53), the ramp (51) being inclined in the prearranged direction of rotation, the two ends (50, 59) of the two members (35, 37) which face one another having a complementary shape, and the other end (61) of the second member (37) being shaped in such a way as to be able to be driven in a rotational movement by an operating tool (71).

10. Safety coupling system according to Claim 9, **characterised in that** the first member (35) has inside it a recess (57) shaped in such a way that an operating tool can drive it in a rotational movement in one of the two possible directions of rotation and **in that** at least one member (35, 37) has at least one diaphragm (63) capable of being pierced by an operating tool and that the diaphragm (63) is positioned ahead of the shaped recess (57) in the first member (35) as viewed in the direction of penetration of the screw.

11. Safety coupling system according to one of Claims 4 to 10, **characterised in that** the screw (29) and the driving arrangement (34) are mounted in a longitudinal recess (33) in an item (3) belonging to one of the corresponding sub-assemblies and **in that** the screw (29) and the driving arrangement (34) for the screw (29) are capable of displacement to a certain extent along the axis of penetration of the screw (29) and movable around the axis of penetration.

12. Safety coupling system according to one of Claims 4 to 11, **characterised in that** the screw (29) is a self-tapping screw.

13. Safety coupling system according to the any one of Claims 4 to 12, **characterised in that** the hole (27) is a recess in an assembly rivet (25).

14. Safety coupling system according to one of Claims 4 to 13, **characterised in that** the screws (29, 29A, 29B) and the matching holes (27, 27A, 27B) of the items belonging to associated sub-assemblies have different diameters from those of items belonging to a different sub-assembly of the said associated sub-assemblies.

15. Safety coupling system according to any one of the foregoing Claims, **characterised in that** the item belonging to one of the associated sub-assemblies is a differential current device (3) and that the item belonging to the other sub-assembly of the associated sub-assemblies is a single-pole or multi-pole circuit breaker (1).
